# FASCICULE DE BREVET EUROPEEN

(11) **EP 2 937 282 B1**
(45) Date de publication et mention de la délivrance du brevet: **13.07.2016**
(21) Numéro de dépôt: 15155949.9
(22) Date de dépôt: 20.02.2015
(51) Int. Cl.: B64C 27/32, B64C 27/51, B64C 27/54

(54) **Rotor comportant un mécanisme de butée en traînée, et aéronef.**
Rotor, der einen Schwenkanschlagsmechanismus umfasst, und Luftfahrzeug
A rotor including a lead/lag abutment mechanism, and an aircraft.

(30) Priorité: 24.04.2014 FR 1400961
(43) Date de publication de la demande: 28.10.2015
(73) Titulaire: Airbus Helicopters, 13725 Marignane Cedex (FR)
(72) Inventeur: Mazet, Stéphane, 13340 ROGNAC (FR); Bencardino, Sandra, 13700 MARIGNANE (FR)
(74) Mandataire: GPI & Associés

(56) Documents cités:
- EP-A1- 0 340 095
- EP-A1- 0 478 444
- US-A- 3 106 965

## Description

La présente invention concerne un rotor comportant un mécanisme de butée en traînée, et un aéronef muni d'un tel rotor.

L'invention se situe donc dans le domaine technique des rotors de giravion. Plus spécifiquement, l'invention se situe dans le domaine des butées équipant de tels rotors pour limiter le mouvement en traînée des ensembles sustentateurs portés par les moyeux de ces rotors.

En effet, un giravion comporte usuellement au moins un rotor pour assurer au moins en partie la sustentation voire la propulsion de ce giravion.

Un rotor comprend un moyeu mis en rotation par un mât. Le moyeu porte alors au moins deux ensembles sustentateurs. Par suite, chaque ensemble sustentateur est muni d'une pale reliée au moyeu par au moins un organe de retenue et de mobilité. Chaque pale peut notamment comprendre un élément sustentateur fixé à un manchon ou encore un élément sustentateur muni d'un manchon intégré.

Par exemple, un organe de retenue et de mobilité inclut une articulation dénommée « butée sphérique ». Chaque butée sphérique peut avoir une armature fixée au moyeu et une armature fixée à un manchon, que ce manchon soit intégré ou non à un élément sustentateur.

Les pales sont donc des éléments allongés sensiblement plans qui sont portés par le moyeu. Le montage des pales sur le moyeu est procuré par des organes de montage individuels des pales sur le moyeu qui incluent les organes de retenue et de mobilité reliant les ensembles sustentateurs au moyeu.

Le moyeu peut être un moyeu à plateaux muni de deux plateaux solidaires d'un mât. Par exemple, une armature d'un organe de retenue et de mobilité est fixée aux plateaux par une broche.

Selon une autre réalisation, le moyeu peut comporter un unique plateau fixé au mât, ce plateau étant pourvu de bras radiaux comportant des ouvertures. Un organe de retenue et de mobilité est éventuellement positionné dans chaque ouverture, en étant solidarisé au plateau par une armature. Un manchon s'étend alors de part et d'autre du plateau en s'étendant de l'organe de retenue et de mobilité vers un élément sustentateur.

Les organes de montage équipent respectivement chacune des pales à leur emplanture pour autoriser leur manoeuvre par un opérateur. Le montage mobile des pales sur le moyeu permet par exemple à un pilote de giravion d'opérer en vol des variations collectives ou cycliques du pas des pales pour influer sur le comportement du giravion au regard de sa sustentation et/ou de sa propulsion.

La mobilité des pales sur le moyeu autorise leur déplacement en traînée, en pas et en battement.

Pour le contrôle du pas, le manchon peut de plus comporter une entretoise articulée à un levier de pas relié à un dispositif de commande permettant de contrôler le pas de la pale. La manoeuvre du dispositif de commande induit une translation du levier de pas, cette translation permettant de modifier le pas de la pale.

Dans ces conditions, le mouvement en traînée de la pale peut induire un impact entre le moyeu et le manchon d'une pale, et notamment avec son levier de pas.

Par ailleurs, certains rotors sont équipés d'adaptateurs de traînée inter-pales s'étendant entre deux pales adjacentes. Pour ces rotors, le mode de traînée collectif n'est pas toutefois amorti par les adaptateurs de traînée. Dès lors, un constructeur peut être incité à protéger le moyeu contre des chocs survenant suite à un mouvement collectif en traînée des ensembles sustentateurs, notamment durant les phases de démarrage et d'arrêt du rotor relatives respectivement à des phases d'accélération et de décélération.

Le document EP 0340 095 présente un moyeu muni de bossages présentant des surfaces de butée de traînée en vis-à-vis de surfaces de butée des pales. Les surfaces de butée de traînée sont légèrement bombées avec une double courbure.

On connaît en outre des butées métalliques « martyres » agencées sur les bras de moyeux portant les pales. Deux butées métalliques par pale sont agencées sur le moyeu pour servir de butées suite à un mouvement en traînée d'une pale selon deux sens de rotation opposés.

Chaque butée métallique a la forme d'un cavalier fixé à l'extrémité du bras de manière à être en regard d'un manchon.

Au lieu d'impacter le moyeu suite à un mouvement en traînée, un ensemble sustentateur peut buter contre une butée de traînée.

Toutefois, une telle butée métallique peut s'avérer difficile à mettre en place sur un moyeu en matériaux composites. En effet, un moyeu en matériaux composites peut présenter des dispersions de fabrication par rapport à une définition théorique. Dès lors, la géométrie réelle d'un moyeu en matériaux composites peut rendre délicat l'agencement d'une butée de traînée métallique dimensionnée à partir d'une forme théorique du moyeu.

De plus, l'extrémité du bras peut avoir une forme complexe, par exemple en tronc de cône. Une butée métallique peut être difficilement adaptable à une telle forme complexe, la mise en place s'avérant d'autant plus délicate en cas de dispersions de fabrication du moyeu.

En outre, l'impact d'un ensemble sustentateur sur une butée métallique génère un pic d'effort local, risquant de délaminer localement un moyeu en matériaux composites.

Les documents US 4235570 et US 4203708 décrivent un rotor d'hélicoptère muni de pales articulées à un moyeu par un organe de retenue et de mobilité de type butée sphérique.

De plus, chaque pale est reliée à un bras du moyeu par un vérin limitant le mouvement en traînée d'une pale. Un tel mouvement est restreint à un champ angulaire compris entre une première position dans laquelle le vérin est complétement rétracté et une deuxième position dans laquelle le vérin est complétement étendu.

Le document US 4 551 067 décrit un rotor muni de butées de traînée escamotables.

Le document US 4 297 079 n'est pas présent dans le domaine technique des rotors de giravion. En effet, ce document US 4 297 079 présente une hélice marine.

On connait aussi les documents US 3106965 et EP0478444.

La présente invention a alors pour objet un rotor alternatif muni d'un mécanisme de butée pour limiter le mouvement en traînée d'un ensemble sustentateur, notamment pour un rotor comprenant un moyeu en matériaux composites.

Selon l'invention, un rotor notamment de giravion est muni d'un moyeu et d'une pluralité d'ensembles sustentateurs, chaque ensemble sustentateur ayant un organe de retenue et de mobilité relié à un bras du moyeu pour articuler l'ensemble sustentateur au moyeu, par exemple autour de trois directions de rotation. Le rotor comprend un mécanisme de butée par ensemble sustentateur pour protéger le moyeu suite à un mouvement en traînée de l'ensemble sustentateur, ledit bras comportant une extrémité munie d'une face supérieure et d'une face inférieure qui sont reliées par une tranche en regard d'un ensemble sustentateur.

Chaque mécanisme de butée d'un ensemble sustentateur comprend :
- une cale en élastomère munie d'une section centrale s'étendant transversalement d'une première base vers une deuxième base le long de ladite tranche, chaque base ayant un tronçon central solidaire de la section centrale, le tronçon central étant disposé contre ladite tranche et s'étendant en élévation d'une saillie longitudinale inférieure disposée contre la face inférieure vers une saillie longitudinale supérieure disposée contre la face supérieure de manière à présenter une forme de C,
- deux cavaliers métalliques en forme de C emmanchés respectivement sur la première base et la deuxième base,
- deux axes de fixation traversant chacun un cavalier ainsi que les deux saillies longitudinales d'une base et un orifice dudit bras s'étendant en élévation de la face inférieure à la face supérieure.

Le rotor est alors muni d'un mécanisme de butée composé d'une partie métallique comprenant deux cavaliers et d'une partie en élastomère comprenant une unique cale.

Dès lors, la cale en élastomère est emmanchée sur l'extrémité d'un bras d'un moyeu. Une telle cale en élastomère permet d'obtenir des formes pouvant être difficilement réalisables avec un cavalier métallique.

La cale étant réalisée à partir d'un élastomère. Cette cale présente donc une souplesse facilitant son agencement, et permet son adaptation sur un moyeu en matériaux composites présentant éventuellement une dispersion de fabrication par rapport à la définition d'un moyeu théorique.

Un mécanisme de butée d'un même type peut alors être agencé sur de multiples moyeux.

Cette faculté d'adaptation peut aussi offrir plus de marges dimensionnelles lors de la fabrication des moyeux.

Une telle cale peut notamment être agencée sur un bras présentant une extrémité en forme de double cônes tronqués.

La cale peut présenter une forme de H ou une forme rectangulaire vu de face, à savoir selon un rayon du rotor. Par contre, la cale présente une forme de C vue de côté, à savoir selon une direction tangentielle au rotor.

Le mécanisme de butée comporte en outre deux cavaliers métalliques emmanchés sur la cale.

Ce mécanisme est alors fixé au moyeu par les axes de fixation, chaque axe de fixation pouvant être un moyen de serrage serrant notamment les saillies longitudinales de la cale contre la face supérieure et la face inférieure d'un bras.

Cette fixation est de plus réversible, ce qui permet de changer si nécessaire au moins un cavalier voire la cale du mécanisme de butée.

Suite à un mouvement de traînée extrême selon une première direction, l'ensemble sustentateur bute contre un premier cavalier. Suite à un mouvement de traînée extrême selon une deuxième direction, l'ensemble sustentateur bute contre un deuxième cavalier.

Lors d'un tel impact, la cale en élastomère permet d'amortir cet impact et de répartir l'effort exercé par le cavalier impacté sur une grande surface de la tranche, à savoir la surface de la base coiffée par ce cavalier impacté. Cette caractéristique tend à éviter la génération d'un pic d'effort local pour limiter les risques de délaminage d'un moyeu en matériaux composites par exemple.

Dès lors, le mécanisme de butée peut permettre de tendre à limiter les risques de délaminage d'un moyeu lorsqu'un ensemble sustentateur est en butée contre un cavalier. De plus, la cale en élastomère permet de tolérer des dispersions de fabrication.

Ce mécanisme de butée est alors un mécanisme relativement simple, et de fait éventuellement peu onéreux.

Le rotor peut de plus comporter une ou plusieurs des caractéristiques additionnelles qui suivent.

En particulier, le moyeu peut être en matériaux composites.

Le moyeu peut en effet être par exemple composé d'une multitude de couches de tissus tels que des tissus de carbone compressés à chaud avec une résine.

Dans le moule de fabrication du moyeu, seules des grandes ouvertures sont possibles, ouvertures qui correspondent aux alvéoles permettant d'agencer les organes de retenue et de mobilité. Pour le passage de certains axes, des trous sont réalisables par un usinage « classique ».

Par exemple, chaque axe de fixation comprenant un boulon muni d'une tête et d'un écrou, le mécanisme comporte deux rondelles par axe de fixation disposées respectivement entre une tête de l'axe de fixation et une saillie longitudinale d'une base ainsi qu'entre un écrou de l'axe de fixation et l'autre saillie longitudinale de cette base, chaque rondelle étant agencée dans un trou oblong d'un cavalier permettant un déplacement de ce cavalier en se rapprochant du moyeu suite à un choc.

Pour participer à l'amortissement et maintenir les cavaliers sur le moyeu, l'axe de fixation est équipé de deux rondelles qui compriment la cale en élastomère. Ces rondelles sont ainsi placées sous la tête et sous l'écrou.

Chaque cavalier comporte alors des trous oblongs dans lesquels peuvent coulisser les rondelles. Par conséquent, suite à un impact avec un ensemble sustentateur, un cavalier peut se déplacer légèrement par rapport au moyeu. Ce déplacement permet d'amortir l'impact de l'ensemble sustentateur sur le cavalier par un écrasement de la cale en élastomère entre le cavalier et la tranche d'un bras du moyeu.

De plus ces usinages de forme oblongue des perçages des cavaliers réduisent les risques de cisaillement des axes de fixation suite à un impact sur un cavalier.

Par ailleurs, ladite extrémité d'un bras peut présenter deux profils distincts au droit de la première base et de la deuxième base d'une cale. La première base et la deuxième base sont alors différentes, lesdits deux cavaliers étant identiques.

En raison d'une forme par exemple tronconique d'une extrémité d'un bras et de l'excentricité de l'axe de pas de l'ensemble sustentateur, les épaisseurs du moyeu au droit des deux cavaliers d'un même mécanisme peuvent être différentes.

Cette différence est compensée par l'utilisation d'une cale comprenant des bases différentes. Dès lors, les deux cavaliers peuvent être identiques ce qui simplifie le mécanisme de butée et réduit son coût d'usinage.

En outre, la cale en élastomère est naturellement détrompée ce qui facilite son agencement sur l'extrémité d'un bras d'un moyeu.

Par ailleurs, au moins une saillie longitudinale peut être effilée, ladite saillie longitudinale s'amincissant selon une direction longitudinale en partant dudit tronçon central vers un axe de rotation du moyeu.

Cette caractéristique facilite son agencement sur un bras de forme conique.

Par ailleurs, au moins un cavalier peut être emmanché en force sur une base de ladite cale.

Le cavalier est alors monté sur une cale en comprimant légèrement l'élastomère de cette cale de façon à empêcher la présence de jeux.

Par ailleurs, au moins un cavalier peut comporter une portion centrale disposée contre le tronçon central d'une base de ladite cale, le cavalier ayant deux branches solidaires de la portion centrale qui sont disposée contre les saillies longitudinales de cette base, cette portion centrale comportant une excroissance en regard de l'ensemble sustentateur, cette excroissance ayant la forme d'une portion cylindrique d'un cylindre dont l'axe de symétrie est sensiblement parallèle à la tranche d'un bras pour qu'un impact avec un ensemble sustentateur se produise selon une génératrice du cylindre quel que soit un angle de battement de l'ensemble sustentateur.

Notamment, l'axe de symétrie est éventuellement confondu avec l'axe de battement d'un ensemble sustentateur.

Cette caractéristique vise à obtenir un angle de traînée maximal sensiblement constant quel que soit l'angle de battement de l'ensemble sustentateur.

Par ailleurs, le mécanisme de butée peut comporter au moins une surface de butée additionnelle fixée de manière réversible sur un ensemble sustentateur de manière à buter contre un cavalier à partir d'un angle de traînée seuil.

La surface de butée représente alors une pièce martyre d'un ensemble sustentateur pouvant être remplacée.

Une telle surface de butée est éventuellement métallique.

Par ailleurs, la surface de butée peut comporter une protubérance en regard d'un cavalier, ladite protubérance ayant la forme d'une portion cylindrique de cylindre.

La surface de butée additionnelle peut aussi avoir la forme d'un arc de cercle centré sur un axe de pas de l'ensemble sustentateur.

Cette caractéristique vise à permettre un contact avec un cavalier indépendamment de l'angle de pas de la l'ensemble sustentateur.

En outre, lorsqu'un ensemble sustentateur comporte une entretoise articulée à un levier de pas, cette entretoise peut porter au moins une surface de butée. Par exemple, l'entretoise comporte deux surfaces de butée coopérant chacune respectivement avec un cavalier suite à un mouvement de traînée selon deux directions opposées.

Outre un rotor, l'invention concerne un aéronef du type décrit précédemment, notamment un giravion.

L'invention et ses avantages apparaîtront avec plus de détails dans le cadre de la description qui suit avec des exemples donnés à titre illustratif en référence aux figures annexées qui représentent :
- la figure 1, un vue d'un rotor d'aéronef selon l'invention,
- la figure 2, une vue d'un bras d'un moyeu muni d'un mécanisme de butée en traînée d'un ensemble sustentateur,
- la figure 3, une vue éclatée partielle de ce mécanisme,
- la figure 4, une coupe de ce mécanisme,
- la figure 5, une vue de dessus d'un cavalier,
- la figure 6, un schéma présentant une surface de butée ,et
- La figure 7, un schéma présentant une surface de butée alternative.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. La deuxième direction Y est dite transversale. Enfin, la troisième direction Z est dite en élévation.

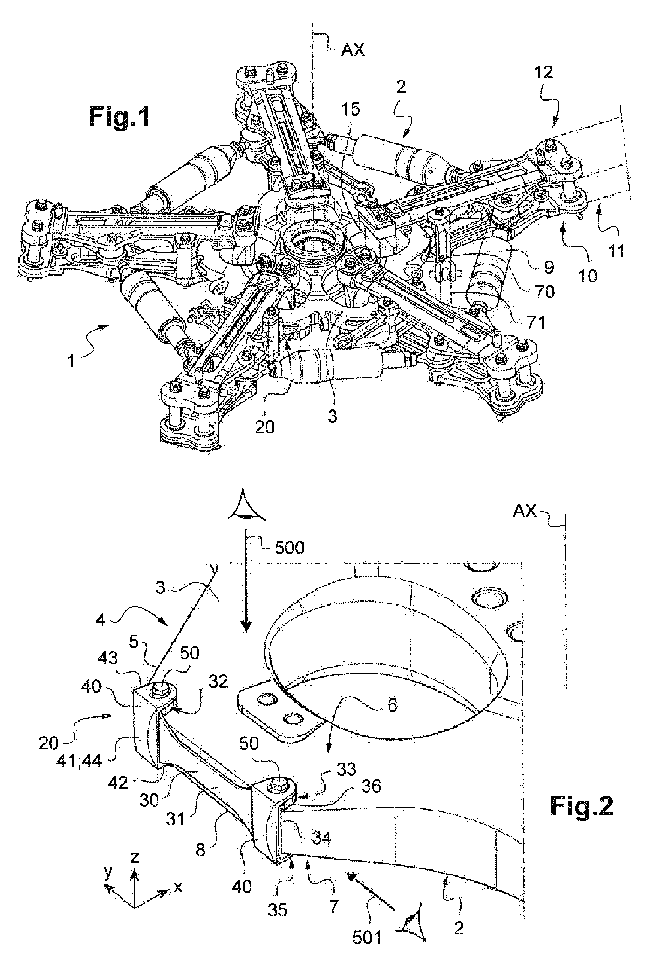

La figure 1 présente un rotor 2 d'un aéronef 1, par exemple un rotor assurant au moins la sustentation d'un giravion.

Le rotor 2 est muni d'un moyeu portant une pluralité d'ensembles sustentateurs 10.

Chaque ensemble sustentateur est pourvu d'une pale comprenant un élément sustentateur 11 et un manchon 12. La figure 1 fait apparaître un élément sustentateur broché sur le manchon 12. Néanmoins, le manchon 12 peut être une partie constitutive de la pale.

Par ailleurs, l'ensemble sustentateur comporte un organe de retenue et de mobilité 15 articulant l'ensemble sustentateur au moyeu 3. Par exemple, un organe de retenue et de mobilité comprend un organe lamifié, plus connu sous l'expression « butée sphérique élastomérique lamifiée » ou plus simplement « butée sphérique ».

Par conséquent, le moyeu comporte un bras par ensemble sustentateur, l'organe de retenue et de mobilité d'un ensemble sustentateur étant fixé à un bras. Cet organe de retenue et de mobilité comprend par exemple une armature fixée à un bras, et une armature fixée à un manchon.

Ainsi, le bras peut comprendre une alvéole dans laquelle un organe de retenue et de mobilité est agencé. Un tel moyeu peut être un moyeu en matériaux composites.

Cet organe de retenue et de mobilité confère trois degrés de liberté en rotation à la pale, à savoir une liberté de rotation en battement autour d'une direction de battement ainsi qu'une liberté de rotation en pas autour d'une direction de pas et une liberté de rotation en traînée autour d'une direction de traînée.

Pour le contrôle du pas d'une pale, cette pale peut comprendre une entretoise 70 du manchon articulée à un levier de pas 71.

Par ailleurs, le rotor peut comprendre des adaptateurs de traînée 9 inter-pales, chaque adaptateur de traînée s'étendant du manchon d'une pale vers une autre pale adjacente.

En outre, le rotor comporte au moins un mécanisme 20 de butée pour protéger le moyeu contre un éventuel impact contre un ensemble sustentateur suite à un mouvement en traînée de cet ensemble sustentateur. Chaque mécanisme 20 de butée limite alors le mouvement en traînée de l'ensemble sustentateur entre deux positions extrêmes.

La figure 2 présente un bras 4 d'un moyeu. Ce bras 4 est muni d'une extrémité 5 pourvue d'une face supérieure 6 et d'une face inférieure 7 reliées par une tranche 8. La tranche 8 est alors en regard d'un ensemble sustentateur et notamment de la surface de l'ensemble sustentateur susceptible d'impacter le moyeu suite à un mouvement de traînée. Par exemple, la tranche 8 est en regard d'une entretoise 70 porteuse d'un levier de pas.

L'extrémité 5 peut avoir une forme complexe de double cônes tronqués, l'extrémité 5 formant un cône selon une vue de dessus 500, et formant un autre cône selon une vue tangentielle 501.

Le mécanisme de butée possède alors une cale 30 en élastomère emmanchée sur l'extrémité 5. Cette cale 30 est en effet pourvue d'une première base 32 et d'une deuxième base 33 reliées par une section centrale 31.

La section centrale 31 est sensiblement plane et disposée contre la tranche 8. La section centrale 31 s'étend alors en élévation et transversalement le long de la tranche 8.

Par contre, chaque base a une forme de C pour enserrer conjointement la face supérieure 6 ainsi que la face inférieure 7 et la tranche 8.

Ainsi, chaque base 32, 33 comprend un tronçon central 34 sensiblement plan qui est plaqué contre la tranche 8 et qui est solidaire de la section centrale 31. La section centrale 31 ainsi que le tronçon central de la première base 32 et le tronçon central de la deuxième base 33 sont sensiblement présents dans un même plan en élévation dit « plan d'accolement » par commodité.

De plus, chaque base comprend deux saillies longitudinales 35, 36 présentes à deux extrémités du tronçon central 34 de cette base.

Par suite, chaque base comporte une saillie longitudinale inférieure 35 s'étendant à partir du tronçon central vers un axe de rotation AX du moyeu en étant disposée contre la face inférieure 7 du moyeu. De même, chaque base comporte une saillie longitudinale supérieure 36 s'étendant à partir du tronçon central vers un axe de rotation AX du moyeu en étant disposée contre la face supérieure 6 du moyeu.

Chaque saillie longitudinale d'une base est sensiblement perpendiculaire au plan d'accolement, et donc au tronçon central de la base.

De plus, le mécanisme de butée est muni de deux cavaliers 40 métalliques recouvrant chacun une base 32, 33 de la cale 30.

Ainsi, les deux cavaliers ont une forme de C pour être emmanchés respectivement sur la première base 32 et sur la deuxième base 33.

Chaque cavalier 40 représente une surface martyre impactée par un ensemble sustentateur suite à une rotation de l'ensemble sustentateur selon deux directions opposées. Un cavalier sert de surface de contact en cas de rotation de l'ensemble sustentateur selon un sens dextrorsum, alors que l'autre cavalier sert de surface de contact en cas de rotation de l'ensemble sustentateur selon un sens senestrorsum.

Par ailleurs, le mécanisme de butée comprend deux axes de fixation 50. Chaque axe de fixation traverse chacun un cavalier 40 ainsi que les deux saillies longitudinales 35,36 d'une base 32, 33 et un orifice du bras 4.

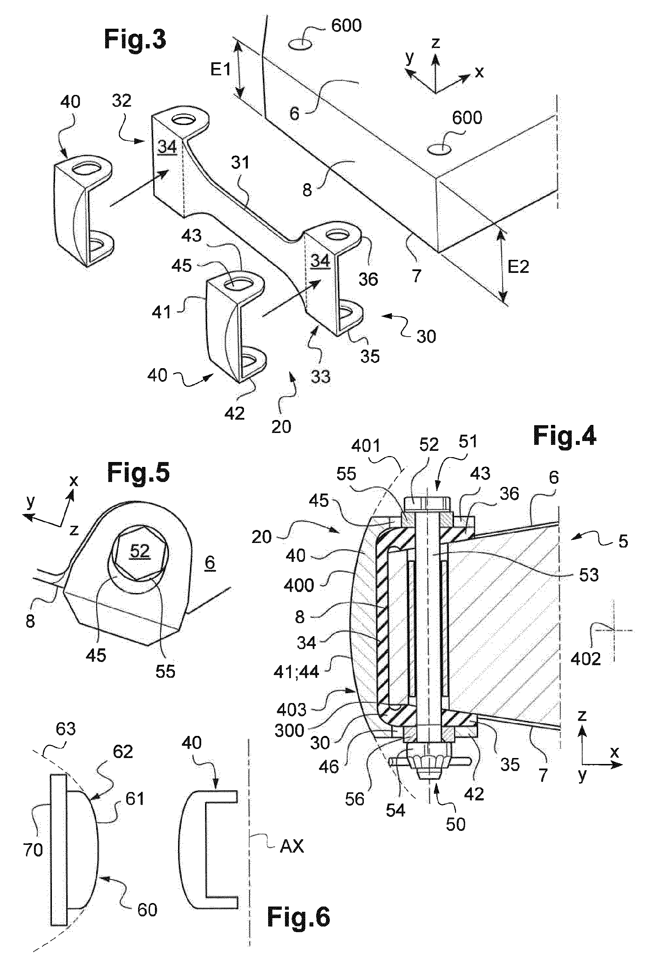

La figure 3 est une vue éclatée présentant la cale et les deux cavaliers d'un mécanisme de butée.

Conformément à cette figure 3, l'extrémité 5 d'un moyeu peut présenter des épaisseurs différentes au droit de l'emplacement des deux cavaliers.

Ainsi, la tranche 8 peut présenter par exemple une première épaisseur E1 au niveau de l'emplacement d'une première base de la cale, et une deuxième épaisseur E2 au niveau de l'emplacement d'une deuxième base de la cale. La première épaisseur E1 et la deuxième épaisseur E2 sont alors différentes.

Dès lors, la première base 32 et la deuxième base 33 sont favorablement géométriquement différentes. Par exemple, la première base peut posséder des saillies longitudinales plus épaisses que les saillies longitudinales de la deuxième base.

En effet, la première base et la deuxième base peuvent être conformées pour permettre l'utilisation de deux cavaliers 40 identiques.

Pour agencer le mécanisme 20, un opérateur emmanche alors les bases de la cale sur l'extrémité du bras, afin que la section centrale 31 et les tronçons centraux 34 des bases soient en contact avec la tranche 8. Chaque saillie longitudinale supérieure 36 repose alors sur la face supérieure 6 du bras, et chaque saillie longitudinale inférieure 35 est disposée contre la face inférieure 7 du bras.

En outre chaque saillie longitudinale comporte un perçage en vis-à-vis d'un orifice 600 du bras.

La structure en élastomère de la cale permet de tolérer des dispersions dimensionnelles de fabrication du moyeu par rapport à une définition théorique du moyeu.

Par suite, l'opérateur emmanche chaque cavalier sur une base. Par exemple, chaque cavalier est emmanché en force pour éviter la présence d'un jeu.

Dès lors, une portion centrale 41 d'un cavalier est disposée contre le tronçon central 34 d'une base 32, 33 de ladite cale 30, ce cavalier 40 ayant deux branches 42, 43 solidaires de la portion centrale 4. Ces deux branches sont disposée contre les saillies longitudinales 35, 36 de cette base 32, 33. La face de la portion centrale d'un cavalier disposée contre le tronçon central 34 d'une base peut être favorablement plane. De même, la face du tronçon central d'une base disposée contre la portion centrale d'un cavalier peut être favorablement plane.

De plus, chaque branche comporte un trou disposé en vis-à-vis d'un orifice 600 du bras.

En référence à la figure 4, l'opérateur insère alors un axe de fixation 50 dans chaque orifice 600.

Chaque axe de fixation est pourvu de deux rondelles et d'un boulon 51 muni d'une tête 52 et d'un écrou 54 pour serrer le mécanisme de butée contre le bras du moyeu.

Dès lors, la tige 53 du boulon traverse les deux trous 45, 46 des branches d'un cavalier ainsi que les deux perçages des saillies longitudinales d'une base et un orifice 600.

Une rondelle 55 traversée par cette tige est serrée entre la tête 52 du boulon et une saillie longitudinale 36 d'une base, et l'autre rondelle 56 est serrée entre un écrou 54 et l'autre saillie longitudinale 35 de cette base.

En outre, chaque trou d'un cavalier peut être un trou oblong.

En référence aux figures 4 et 5, chaque rondelle 55, 56 est alors agencée dans un trou 45, 46 oblong d'un cavalier 40. Cette caractéristique autorise le déplacement radial de ce cavalier lui permettant de se rapprocher du moyeu 3 suite à un choc.

En référence à la figure 4, au moins une saillie longitudinale 35,36 peut être effilée pour compenser le profil tronconique de l'extrémité du bras du moyeu. Ainsi, une telle saillie longitudinale 35,36 s'amincit en partant du tronçon central 34 en se dirigeant vers un axe de rotation du moyeu.

Par ailleurs, la portion centrale 41 d'une cale peut comporter une excroissance 44 en regard de l'ensemble sustentateur 10, et notamment de la surface de l'ensemble sustentateur susceptible d'impacter un moyeu.

Cette excroissance 44 a la forme d'une portion cylindrique 403 d'un cylindre 401 dont l'axe de symétrie 402 est sensiblement parallèle à la tranche 8 d'un bras. Plus particulièrement, cet axe de symétrie peut être confondu avec un axe de battement de l'ensemble sustentateur en regard de l'excroissance.

En outre, la cale 30 peut être une pièce moulée. Pour éviter une interférence de forme entre l'angle formé par exemple par les faces 6 et 8 du moyeu 3, on réalise au moulage une piqure 300 dans la zone de jonction entre une saillie longitudinale 36 et la partie centrale 34 de la cale 30.

En référence à la figure 6, le mécanisme 20 de butée peut comporter au moins une surface de butée 60 additionnelle fixée de manière réversible sur un ensemble sustentateur 10.

Par exemple, le mécanisme comporte une surface de butée additionnelle par cavalier, destinée à impacter ce cavalier.

Une telle surface de butée 60 est éventuellement métallique.

De plus, la surface de butée 60 peut être fixée de manière réversible à une entretoise 70 articulée à un levier de pas.

En outre, à l'instar d'un cavalier, la surface de butée 60 peut comporter une protubérance 61 en regard d'un cavalier 40. Cette protubérance peut avoir la forme d'une portion cylindrique 62 d'un cylindre 63. L'axe de symétrie de ce cylindre 63 est éventuellement parallèle à l'axe de battement de l'ensemble sustentateur équipé de la surface de butée.

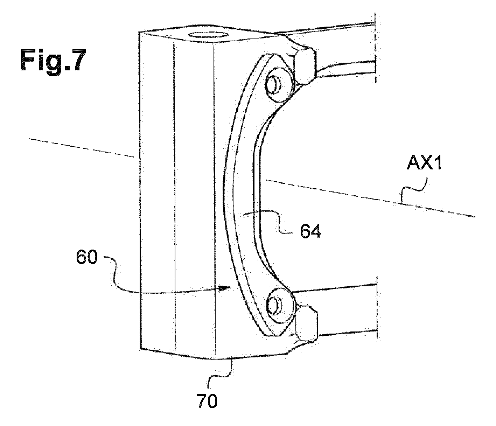

En référence à la figure 7, la surface de butée additionnelle peut avoir la forme d'un arc de cercle 64 ayant pour centre l'axe de pas AX1 de l'ensemble sustentateur portant cette surface de butée additionnelle.

La surface de butée peut être plate ou comporter une protubérance.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Rotor (2) muni d'un moyeu (3) et d'une pluralité d'ensembles sustentateurs (10), chaque ensemble sustentateur (10) ayant un organe de retenue et de mobilité (15) relié à un bras (4) du moyeu (3) pour articuler l'ensemble sustentateur (10) au moyeu (3), ledit rotor (2) ayant un mécanisme (20) de butée par ensemble sustentateur (10) pour protéger le moyeu (3) suite à un mouvement en traînée de l'ensemble sustentateur (10), ledit bras (4) comportant une extrémité (5) munie d'une face supérieure (6) et d'une face inférieure (7) qui sont reliées par une tranche (8) en regard d'un ensemble sustentateur (10),
**caractérisé en ce que** chaque mécanisme (20) de butée d'un ensemble sustentateur (10) comprend :
- une cale (30) en élastomère munie d'une section centrale (31) s'étendant transversalement d'une première base (32) vers une deuxième base (33) le long de ladite tranche (8), chaque base (32, 33) ayant un tronçon central (34) solidaire de la section centrale (31), le tronçon central de chaque base étant disposé contre ladite tranche (8) et s'étendant en élévation d'une saillie longitudinale inférieure (35) disposée contre la face inférieure (7) vers une saillie longitudinale supérieure (36) disposée contre la face supérieure (6) de manière à présenter une forme de C,
- deux cavaliers (40) métalliques en forme de C emmanchés respectivement sur la première base (32) et la deuxième base (33),
- deux axes de fixation (50) traversant chacun un cavalier (40) ainsi que les deux saillies longitudinales (35,36) d'une base (32, 33) et un orifice (600) dudit bras (4) qui s'étend en élévation de la face inférieure (7) à la face supérieure (6).

2. Rotor selon la revendication 1,
**caractérisé en ce que** chaque axe de fixation (50) comprenant un boulon (51) muni d'une tête (52) et d'un écrou (54), ledit mécanisme (20) comporte deux rondelles (55, 56) par axe de fixation (50) disposées respectivement entre une tête (52) de l'axe de fixation (50) et une saillie longitudinale (35,36) d'une base (32, 33) ainsi qu'entre un écrou (54) de l'axe de fixation (50) et l'autre saillie longitudinale (36,35) de cette base (32, 33), chaque rondelle (55, 56) étant agencée dans un trou (45, 46) oblong d'un cavalier (40) permettant un déplacement de ce cavalier en se rapprochant du moyeu (3) suite à un choc.

3. Rotor selon l'une quelconque des revendications 1 à 2,
**caractérisé en ce que**, ladite extrémité (5) présentant deux profils distincts au droit de la première base (32) et de la deuxième base (33), la première base (32) et la deuxième base (33) sont différentes, lesdits deux cavaliers (40) étant identiques.

4. Rotor selon l'une quelconque des revendications 1 à 3,
**caractérisé en ce qu'**au moins une saillie longitudinale (35,36) est effilée, ladite saillie longitudinale (35,36) s'amincissant selon une direction longitudinale en partant dudit tronçon central (34) vers un axe de rotation (AX) du moyeu (3).

5. Rotor selon l'une quelconque des revendications 1 à 4,
**caractérisé en ce qu'**au moins un cavalier (40) est emmanché en force sur une base (32, 33) de ladite cale (30).

6. Rotor selon l'une quelconque des revendications 1 à 5,
**caractérisé en ce que** ledit moyeu (3) est en matériaux composites.

7. Rotor selon l'une quelconque des revendications 1 à 6,
**caractérisé en ce qu'**au moins un cavalier (40) comporte une portion centrale (41) disposée contre le tronçon central (34) d'une base (32, 33) de ladite cale (30), ledit cavalier (40) ayant deux branches (42, 43) solidaires de la portion centrale (41) qui sont disposées contre les saillies longitudinales (35, 36) de cette base (32, 33), ladite portion centrale (41) comportant une excroissance (44) en regard de l'ensemble sustentateur (10), ladite excroissance (44) ayant la forme d'une portion cylindrique (403) d'un cylindre (401) dont l'axe de symétrie est sensiblement parallèle à ladite tranche (8) pour qu'un impact avec un ensemble sustentateur (10) se produise selon une génératrice (400) dudit cylindre quel que soit un angle de battement de l'ensemble sustentateur (10).

8. Rotor selon la revendication 7,
**caractérisé en ce que** ledit axe de symétrie est confondu avec un axe de battement d'un ensemble sustentateur.

9. Rotor selon l'une quelconque des revendications 1 à 8,
**caractérisé en ce que** le mécanisme (20) de butée comporte au moins une surface de butée (60) additionnelle fixée de manière réversible sur un ensemble sustentateur (10) de manière à buter contre un cavalier (40) à partir d'un angle de traînée seuil.

10. Rotor selon la revendication 9,
**caractérisé en ce que** ladite surface de butée (60) est métallique.

11. Rotor selon l'une quelconque des revendications 9 à 10,
**caractérisé en ce que** ladite surface de butée (60) comporte une protubérance (61) en regard d'un cavalier (40), ladite protubérance (61) ayant la forme d'une portion cylindrique (62) de cylindre (63).

12. Rotor selon la revendication 9,
**caractérisé en ce que** ladite surface de butée (60) additionnelle a la forme d'un arc de cercle (64) centré sur un axe de pas (AX1) dudit ensemble sustentateur.

13. Rotor selon l'une quelconque des revendications 9 à 12,
**caractérisé en ce qu'**un ensemble sustentateur (10) comporte une entretoise (70) articulée à un levier de pas, ladite entretoise (70) portant au moins une surface de butée (60).

14. Aéronef (1),
**caractérisé en ce que** ledit aéronef (1) comporte un rotor (2) selon l'une quelconque des revendications 1 à 13.

## Patentansprüche

1. Rotor (2) mit einer Nabe (3) und einer Mehrzahl Auftrieb erzeugender Gruppen (10), wobei jede Auftrieb erzeugende Gruppe (10) ein Halterungs- und Beweglichkeitsorgan (15) aufweist, das mit einem Arm (4) der Nabe (3) verbunden ist, um die Auftrieb erzeugende Gruppe (10) an der Nabe (3) anzulenken, wobei der Rotor (2) einen Anschlagsmechanismus (20) pro Auftrieb erzeugender Gruppe (10) aufweist, um die Nabe (3) nach einer Schleppbewegung der Auftrieb erzeugenden Gruppe (10) zu schützen, wobei der Arm (4) ein Ende (5) aufweist, das mit einer oberen Fläche (6) und einer unteren Fläche (7) versehen ist, die über einen Rand (8) gegenüber einer Auftrieb erzeugenden Gruppe (10) miteinander verbunden sind, **dadurch gekennzeichnet, dass** jeder Anschlagsmechanismus (20) einer Auftrieb erzeugenden Gruppe (10) aufweist:
- eine Halterung (30) aus einem Elastomer mit einem mittleren Abschnitt (31), der sich quer von einer ersten Basis (32) zu einer zweiten Basis (33) entlang des Randes (8) erstreckt, wobei jede Basis (32, 33) einen mittleren Abschnitt (34) aufweist, der mit dem zentralen Abschnitt (31) fest verbunden ist, wobei der mittlere Abschnitt jeder Basis gegen den Abschnitt (8) angeordnet ist und sich von einem unteren Längsvorsprung (35), der gegen die untere Fläche (7) angeordnet ist, nach oben zu einem oberen Längsvorsprung (36) erstreckt, der gegen die obere Fläche (6) so angeordnet ist, dass die Form eines C's gebildet wird,
- zwei C-förmige Klemmplatten (40) aus Metall, die jeweils auf die erste Basis (32) und die zweite Basis (33) aufgedrückt sind,
- zwei Befestigungsachsen (50), die jeweils eine Klemmplatte (40) sowie die beiden Längsvorsprünge (35, 36) einer Basis (32, 33) und eine Öffnung (600) des Arms (4), die sich von der unteren Fläche (7) nach oben zur oberen Fläche (6) erstreckt, durchqueren.

2. Rotor nach Anspruch 1,
**dadurch gekennzeichnet, dass** jede Befestigungsachse (50) einen Schraubenbolzen (51) mit einem Kopf (52) und eine Schraubenmutter (54) aufweist, wobei der Mechanismus (20) zwei Unterlegscheiben (55, 56) pro Befestigungsachse (50) aufweist, die jeweils zwischen einem Kopf (52) der Befestigungsachse (50) und einem Längsvorsprung (35, 36) einer Basis (32, 33) sowie zwischen einer Schraubenmutter (54) der Befestigungsachse (50) und dem anderen Längsvorsprung (36, 35) dieser Basis (32, 33) angeordnet sind, wobei jede Unterlegscheibe (55, 56) in einem Langloch (45, 46) einer Klemmplatte (40), das eine Verschiebung dieser Klemmplatte nach einem Stoß auf die Nabe (3) zu erlaubt, angeordnet ist.

3. Rotor nach einem der Ansprüche 1 bis 2,
**dadurch gekennzeichnet, dass** das Ende (5) zwei unterschiedliche Profile an der ersten Basis (32) und an der zweiten Basis (33) aufweist, wobei die erste Basis (32) und die zweite Basis (33) unterschiedlich sind, und die beiden Klemmplatten (40) identisch sind.

4. Rotor nach einem der Ansprüche 1 bis 3,
**dadurch gekennzeichnet, dass** mindestens ein Längsvorsprung (35, 36) spitz zulaufend ist, wobei der Längsvorsprung (35, 36) sich in einer Längsrichtung ausgehend von dem mittleren Abschnitt (34) zu der Drehachse (AX) der Nabe (3) hin verjüngt.

5. Rotor nach einem der Ansprüche 1 bis 4,
**dadurch gekennzeichnet, dass** mindestens eine Klemmplatte (40) auf eine Basis (32, 33) der Halterung (30) aufgepresst ist.

6. Rotor nach einem der Ansprüche 1 bis 5,
**dadurch gekennzeichnet, dass** die Nabe (3) aus einem Verbundmaterial besteht.

7. Rotor nach einem der Ansprüche 1 bis 6,
**dadurch gekennzeichnet, dass** mindestens eine Klemmplatte (40) einen mittleren Bereich (41) aufweist, der gegen den mittleren Abschnitt (34) einer Basis (32, 33) der Halterung (30) angeordnet ist, wobei die Klemmplatte (40) zwei mit dem mittleren Bereich (41) fest verbundene Arme (42, 43) aufweist, die gegen die Längsvorsprünge (35, 36) dieser Basis (32, 33) angeordnet sand, wobei der mittlere Bereich (41) eine Erhebung (44) gegenüber der Auftrieb erzeugenden Gruppe (10) aufweist, wobei die Erhebung (44) die Form eines Zylinderabschnitts (403) eines Zylinders (401) aufweist, dessen Symmetrieachse im Wesentlichen parallel zu dem Rand (8) verläuft, damit ein Zusammenstoßen mit einer Auftrieb erzeugenden Gruppe (10) entlang einer Erzeugenden (400) des Zylinders erfolgt, unabhängig von dem Aufschlagwinkel der Auftrieb erzeugenden Gruppe (10).

8. Rotor nach Anspruch 7,
**dadurch gekennzeichnet, dass** die Symmetrieachse gleich der Aufschlagachse einer Auftrieb erzeugenden Gruppe ist.

9. Rotor nach einem der Ansprüche 1 bis 8,
**dadurch gekennzeichnet, dass** der Anschlagsmechanismus (20) mindestens eine zusätzliche Anschlagsfläche (60) aufweist, die reversibel auf einer Auftrieb erzeugenden Gruppe (10) befestigt ist, derart, dass sie ab einem Schwellenwert des Schleppwinkels gegen eine Klemmplatte (40) anschlägt.

10. Rotor nach Anspruch 9,
**dadurch gekennzeichnet, dass** die Anschlagsfläche (60) aus Metall ist.

11. Rotor nach einem der Ansprüche 9 bis 10,
**dadurch gekennzeichnet, dass** die Anschlagsfläche (60) eine Auswölbung (61) gegenüber einer Klemmplatte (40) aufweist, wobei die Auswölbung (61) die Form eines Zylinderabschnitts (62) des Zylinders (63) hat.

12. Rotor nach Anspruch 9,
**dadurch gekennzeichnet, dass** die zusätzliche Anschlagsfläche (60) die Form eines Kreisbogens (64) hat, der auf einer Neigungsachse (AX1) der Auftrieb erzeugenden Gruppe zentriert ist.

13. Rotor nach einem der Ansprüche 9 bis 12,
**dadurch gekennzeichnet, dass** die Auftrieb erzeugende Gruppe (10) einen Riegel (70) aufweist, der an einem Neigungsverstellhebel angelenkt ist, wobei der Riegel (70) mindestens eine Anschlagsfläche (60) trägt.

14. Luftfahrzeug (1),
**dadurch gekennzeichnet, dass** das Luftfahrzeug (1) einen Rotor (2) nach einem der Ansprüche 1 bis 13 aufweist.

## Claims

1. Rotor (2) provided with a hub (3) and a plurality of lift assemblies (10), each lift assembly (10) having a retention and mobility member (15) connected to an arm (4) of the hub (3) in order to articulate the lift assembly (10) to the hub (3), said rotor (2) having one abutment mechanism (20) per lift assembly (10) in order to protect the hub (3) following a drag movement of the lift assembly (10), said arm (4) comprising an end (5) provided with an upper face (6) and a lower face (7) which are connected by an edge (8) facing a lift assembly (10),
**characterised in that** each abutment mechanism (20) of a lift assembly (10) comprises:
- an elastomer spacer (30) provided with a central section (31) extending transversely from a first base (32) to a second base (33) along said edge (8), each base (32, 33) having a central segment (34) integral with the central section (31), the central segment of each base being arranged against said edge (8) and extending in elevation from a lower longitudinal projection (35) arranged against the lower face (7) to an upper longitudinal projection (36) arranged against the upper face (6) so as to present a C-shape,
- two C-shaped metal brackets (40) engaged respectively on the first base (32) and on the second base (33),
- two fastening pins (50), each passing through a bracket (40) and the two longitudinal projections (35,36) of a base (32, 33) and an orifice (600) of said arm (4) which extends in elevation from the lower face (7) to the upper face (6).

2. Rotor according to claim 1,
**characterised in that** each fastening pin (50) comprising a bolt (51) provided with a head (52) and a nut (54), said mechanism (20) comprises two washers (55, 56) per fastening pin (50) arranged respectively between a head (52) of the fastening pin (50) and a longitudinal projection (35,36) of a base (32, 33) and between a nut (54) of the fastening pin (50) and the other longitudinal projection (36,35) of this base (32, 33), each washer (55, 56) being arranged in an oblong hole (45, 46) of a bracket (40) enabling this bracket to move towards the hub (3) following a shock.

3. Rotor according to any one of claims 1 to 2,
**characterised in that**, said end (5) having two distinct profiles directly in line with the first base (32) and the second base (33), the first base (32) and the second base (33) are different, said two brackets (40) being identical.

4. Rotor according to any one of claims 1 to 3,
**characterised in that** at least one longitudinal projection (35,36) is tapered, said longitudinal projection (35,36) becoming thinner in a longitudinal direction going away from said central segment (34) towards an axis of rotation (AX) of the hub (3).

5. Rotor according any one of claims 1 to 4,
**characterised in that** at least one bracket (40) is engaged by force on a base (32, 33) of said spacer (30).

6. Rotor according to any one of claims 1 to 5,
**characterised in that** said hub (3) is made of composite materials.

7. Rotor according to any one of claims 1 to 6,
**characterised in that** at least one bracket (40) comprises a central portion (41) arranged against the central segment (34) of a base (32, 33) of said spacer (30), said bracket (40) having two branches (42, 43) integral with the central portion (41) which are arranged against the longitudinal projections (35, 36) of this base (32, 33), said central portion (41) comprising a bulge (44) facing the lift assembly (10), said bulge (44) having the shape of a cylindrical portion (403) of a cylinder (401), the axis of symmetry of which is substantially parallel to said edge (8) so that an impact with a lift assembly (10) takes place along a generator line (400) of said cylinder regardless of a flapping angle of the lift assembly (10).

8. Rotor according to claim 7,
**characterised in that** said axis of symmetry coincides with a flapping axis of a lift assembly.

9. Rotor according to any one of claims 1 to 8,
**characterised in that** the abutment mechanism (20) comprises at least one additional abutment surface (60) reversibly fastened on a lift assembly (10) so as to abut against a bracket (40) starting from a threshold drag angle.

10. Rotor according to claim 9,
**characterised in that** said additional abutment surface (60) is made of metal.

11. Rotor according to any one of claims 9 to 10,
**characterised in that** said abutment surface (60) comprises a protuberance (61) facing a bracket (40), said protuberance (61) having the form of a cylindrical portion (62) of a cylinder (63).

12. Rotor according to claim 9,
**characterised in that** said additional abutment surface (60) has the form of a circular arc (64) centred on a pitch axis (AX1) of said lift assembly.

13. Rotor according to any one of claims 9 to 12,
**characterised in that** a lift assembly (10) comprises a crosspiece (70) articulated to a pitch lever, said crosspiece (70) carrying at least one abutment surface (60).

14. Aircraft (1),
**characterised in that** said aircraft (1) comprises a rotor (2) according to any one of claims 1 to 13.
